# EUROPÄISCHE PATENTSCHRIFT

(11) **EP 2 489 526 B1**
(45) Veröffentlichungstag und Bekanntmachung des Hinweises auf die Patenterteilung: **13.11.2013**
(21) Anmeldenummer: 11194434.4
(22) Anmeldetag: 20.12.2011
(51) Int. Cl.: B60C 11/03, B60C 11/04, B60C 11/13

(54) **Laufstreifenprofil eines Fahrzeugluftreifens**
Tread pattern of a vehicle tyre
Profil de bande de roulement d'un bandage pneumatique de véhicule

(30) Priorität: 18.02.2011 DE 102011000813
(43) Veröffentlichungstag der Anmeldung: 22.08.2012
(73) Patentinhaber: Continental Reifen Deutschland GmbH, 30165 Hannover (DE)
(72) Erfinder: Rittweger, Stefan, 30163 Hannover (DE); Behr, Ulrich, 30169 Hannover (DE); Fischer, Markus, 30823 Garbsen (DE); Gerhardt, Joachim, 30890 Barsinghausen (DE)
(74) Vertreter: Finger, Karsten

(56) Entgegenhaltungen:
- EP-A1- 0 547 019
- EP-A2- 2 199 111
- DE-A1- 19 900 266
- JP-A- 6 143 943

## Beschreibung

Die Erfindung betrifft ein Laufstreifenprofil eines Fahrzeugluftreifens mit einer Profilblockreihe, welche in axialer Richtung A des Fahrzeugluftreifens zu der als die für den Einsatz am Fahrzeug als Außenschulter des Reifens ausgebildeten Reifenschulter hin mit einer ersten Umfangsrille und zu der als die für den Einsatz am Fahrzeug als Innenschulter des Reifens ausgebildeten Reifenschulter hin mit einer zweiten Umfangsrille begrenzt wird, wobei die Profilblockreihe aus in Umfangsrichtung U des Fahrzeugluftreifens hintereinander angeordneten und jeweils durch Querrillen von einander beabstandeten Profilblockelementen ausgebildet ist, wobei sich zumindest einige der Querrillen ausgehend von der zweiten Umfangsrille durch die Profilblockreihe hindurch bis in die erste Umfangsrille erstrecken.

Derartige Laufstreifenprofile sind bekannt (siehe EP-A-2 199 111). Bei derartigen Fahrzeugluftreifen soll unter anderem zur Erzielung guter Aquaplaning-Eigenschaften das Wasser möglichst schnell und vollständig über Quer- und Umfangsrillen aufgenommen und abgeleitet werden. Hierzu sind in den Profilblockreihen Querrillen ausgebildet, über die das Wasser aus dem Bereich der Profilblockreihe in die Umfangsrillen abgeleitet wird. Auf diese Weise wird der Wasserfilm zwischen Straßenoberfläche und der radial äußeren Oberfläche der Profilblockelemente, welche die Bodenkontaktoberfläche bilden, möglichst minimiert, um somit guten Griff auf nasser Straße ohne Aquaplaning zu gewährleisten. Um möglichst viel Wasser aus der Bodenkontaktoberfläche der Profilblockreihe in die Umfangsrillen ableiten zu können, werden hierzu die Querrillen mit möglichst großem Querschnitt sowohl mit großer Breite als auch mit großer Tiefe ausgebildet. Hierdurch kann zuverlässig Wasser in großem Umfang aus dem Bereich der Profilblockreihe in die Umfangsrillen abgeleitet werden. Der hierdurch erzeugte große Negativ-Anteil (Void) des Profils innerhalb der

Profilblockreihe reduziert jedoch die Umfangssteifigkeit der Profilblockreihe, wodurch die Trockenperformance-Eigenschaften, wie z.B. Trockenbrems- und Trockenbeschleunigungseigenschaften negativ beeinträchtigt werden. Es sind auch Fahrzeugluftreifen bekannt, bei denen die Querrillen der Profilblockreihen mit kleinerem Querschnitt sowohl mit kleiner Breite und kleiner Tiefe ausgebildet werden. Hierdurch kann die Umfangssteifigkeit der Profilblockreihe verbessert werden, wodurch die Trockenperformance-Eigenschaften wie Trockenbremsen und Trockenbeschleunigen positiv beeinflusst werden. Die kleinen Querschnitte über die gesamte Breite der Profilblockreihe reduzieren jedoch die Wasseraufnahme der Querrillen und die Wasserableitung der Querrillen in die Umfangsrillen, wodurch die Aquaplaning-Eigenschaften negativ beeinflusst werden.

Der Erfindung liegt daher die Aufgabe zugrunde, mit einfachen Mitteln ein derartiges Laufstreifenprofil zu schaffen, bei dem bei Aufrechterhaltung guter Trockenperformance verbesserte Aquaplaning-Eigenschaften ermöglicht werden.

Die Aufgabe wird erfindungsgemäß durch die Ausbildung eines Laufstreifenprofils eines Fahrzeugluftreifens mit einer Profilblockreihe, welche in axialer Richtung A des Fahrzeugluftreifens zu der als die für den Einsatz am Fahrzeug als Außenschulter des Reifens ausgebildeten Reifenschulter hin mit einer ersten Umfangsrille und zu der als die für den Einsatz am Fahrzeug als Innenschulter des Reifens ausgebildeten Reifenschulter hin mit einer zweiten Umfangsrille begrenzt wird, wobei die Profilblockreihe aus in Umfangsrichtung U des Fahrzeugluftreifens hintereinander angeordneten und jeweils durch Querrillen von einander beabstandeten Profilblockelementen ausgebildet ist, wobei sich zumindest einige der Querrillen ausgehend von der zweiten Umfangsrille durch die Profilblockreihe hindurch bis in die erste Umfangsrille erstrecken" gemäß den Merkmalen von Anspruch 1 gelöst, bei dem zumindest einige - insbesondere alle - der sich von der zweiten bis zur ersten Umfangsrille erstreckten Querrillen mit einem ersten von der zweiten Umfangsrille ausgehenden Erstreckungsabschnitt der in axialer Richtung A gemessenen Erstreckungslänge a₁ und mit einem in axialer Richtung A anschließenden bis zur ersten Umfangsrille erstreckten zweiten Erstreckungsabschnitt der in axialer Richtung A gemessenen Erstreckungslänge a₂ mit a₂< a₁ ausgebildet sind, wobei die Querrille jeweils im ersten Erstreckungsabschnitt längs seiner gesamten Erstreckung mit konstanter Rillenbreite b₁ und mit konstanter Rillentiefe t₁ und im zweiten Erstreckungsabschnitt längs seiner gesamten Erstreckung ausgehend vom ersten Erstreckungsabschnitt bis zur ersten Umfangsrille mit stetig zunehmender Rillenbreite b₂ und mit stetig zunehmender Rillentiefe t₂ ausgebildet ist.

Durch diese Ausbildung wird durch den langen ersten Erstreckungsabschnitt der Querrille mit kleinem Reifenquerschnitt mit relativ geringer Breite und geringer Tiefe eine hohe Umfangssteifigkeit der Profilblockreihe gewährleistet, wodurch gute Trockenperformance-Eigenschaften, wie z.B. Trockenbremsen oder Trockenbeschleunigung, ermöglicht werden. Der gegenüber dem ersten Erstreckungsabschnitt relativ kurze zweite Erstreckungsabschnitt mit stetig zur ersten Umfangsrille hin zunehmender Rillentiefe und gleichzeitig stetig zunehmender Rillenbreite bewirkt einen stetig zunehmenden Querschnitt der Querrille im zweiten Erstreckungsbereich sowohl in Tiefenrichtung als auch in Breitenrichtung. Diese Ausbildung mit erstem langen Erstreckungsabschnitt mit kleiner Rillentiefe und Rillenbreite und mit sich anschließenden kurzen Erstreckungsabschnitt mit stetig zunehmender Rillentiefe und stetig zunehmender Rillenbreite bewirkt einen düsenartigen Effekt, mit welchem der Abfluss des Wasser düsenartig in Richtung erster Umfangsrille, welche die zur Reifenaußenseite am Fahrzeug weisende Umfangsrille darstellt, beschleunigt erfolgt. Das Wasser wird hierdurch verstärkt gerade zu der Umfangsrille hin abgeleitet, welche während des Betriebs des Fahrzeugs die hauptsächliche Wasserableitung übernimmt und die andererseits auch für die Ableitung des Wassers und für die Sicherstellung auch guter Handling-Eigenschaften auf nasser Straße besonders wichtig ist. Auf diese Weise werden sowohl gute Trockenperformance-Eigenschaften wie Trockenbrems- und -beschleunigungseigenschaften als auch gute Aquaplaning-Eigenschaften ermöglicht.

Besonders vorteilhaft ist die Ausbildung eines Fahrzeugluftreifens gemäß den Merkmalen von Anspruch 2, wobei die Erstreckungslänge a₂ mit ( a₁ +a₂)/4 ≤ a₂ < ( a₁ +a₂)/2 ausgebildet ist. Auf diese Weise kann eine optimale Entwässerung der Oberfläche bei Sicherstellung eines optimalen Bodenkontaktes gewährleistet werden.

Besonders vorteilhaft ist die Ausbildung eines Fahrzeugluftreifens gemäß den Merkmalen von Anspruch 3, wobei das Verhältnis aus Rillentiefe t₂ und Rillenbreite b₂ des zweiten Erstreckungsabschnitts in allen Querschnittsflächen senkrecht zur Verlängerung der Erstreckungsrichtung der Querrille im ersten Erstreckungsabschnitt mit (t₁/ b₁) < (t₂/ b₂) ausgebildet ist. Hierdurch kann eine für die Entwässerung zur Umfangsrille hin optimierte Querschnittserweiterung umgesetzt werden.

Besonders vorteilhaft ist die Ausbildung eines Fahrzeugluftreifens gemäß den Merkmalen von Anspruch 4, wobei die Rillenbreite b₁ mit 1mm ≤ b₁≤ 2mm ausgebildet ist. Hierdurch ist die Querrille in ihrem schmalen Erstreckungsabschnitt profilmechanisch optimiert ausgebildet.

Besonders vorteilhaft ist die Ausbildung eines Fahrzeugluftreifens gemäß den Merkmalen von Anspruch 5, wobei die Rillentiefe t₁ mit 0,5mm ≤ t₁≤ 2mm ausgebildet ist. Die für Nassgriffeigenschaften wichtigen Querkanten sind aufrechterhalten. Die Ausbildung ermöglicht einen besonders guten Kompromiss zur Lösung des Zielkonfliktes zwischen guter Trockenperformance und guten Nassgriffeigenschaften.

Besonders vorteilhaft zur optimalen Entwässerung ist die Ausbildung eines Fahrzeugluftreifens gemäß den Merkmalen von Anspruch 6, wobei die maximale Rillenbreite b₂ₘₐₓ des zweiten Erstreckungsbereichs an der ersten Umfangsrille mit 3mm ≤ b₂ₘₐₓ≤ 10mm ausgebildet ist.

Besonders vorteilhaft zur optimalen Entwässerung ist die Ausbildung eines Fahrzeugluftreifens gemäß den Merkmalen von Anspruch 7, wobei die maximale Rillentiefe t₂ₘₐₓ des zweiten Erstreckungsbereichs an der ersten Umfangsrille mit 1,5mm ≤ t₂ₘₐₓ≤ 8mm ausgebildet ist.

Besonders vorteilhaft ist die Ausbildung eines Fahrzeugluftreifens gemäß den Merkmalen von Anspruch 8, wobei die Querrille längs ihrer gesamten Erstreckung im zweiten Erstreckungsabschnitt ausgehend vom ersten Erstreckungsabschnitt bis zur ersten Umfangsrille mit konstant zunehmender Rillentiefe t₂ ausgebildet ist. Dies ermöglicht zur Umfangsrille hin eine zunehmende Aufnahmekapazität an Wasser bei beschleunigter Ableitung in die Umfangsrille.

Besonders vorteilhaft ist die Ausbildung eines Fahrzeugluftreifens gemäß den Merkmalen von Anspruch 9, wobei wenigstens eine - insbesondere beide - die Querrille in Umfangsrichtung U begrenzende Rillenwand(e) im zweiten Erstreckungsabschnitt in jeder radialen Position ausgehend vom ersten Erstreckungsabschnitt bis zur ersten Umfangsrille mit einem S-förmigen krümmungsstetigen Konturverlauf ausgebildet ist, wobei der Konturverlauf ausgehend vom ersten Erstreckungsabschnitt zunächst mit einer von der Querrille wegweisenden Krümmung und im Anschluss bis zur ersten Umfangsrille mit einer zur Querrille hinweisenden Krümmung ausgebildet ist. Hierdurch kann die Ableitung und das Ausströmen des Wassers aus der Querrille besonders verwirbelungsfrei ermöglicht werden.

Besonders vorteilhaft ist die Ausbildung eines Fahrzeugluftreifens gemäß den Merkmalen von Anspruch 10, wobei die Querrille zumindest im ersten Erstreckungsabschnitt in ihrer Haupterstreckungsrichtung unter Einschluss eines Winkels α zur axialen Richtung A des Fahrzeugluftreifens ausgerichtet ist mit 0°≤ α ≤60°.

Besonders vorteilhaft ist die Ausbildung eines Fahrzeugluftreifens gemäß den Merkmalen von Anspruch 11, wobei zumindest im ersten Erstreckungsbereich der Querrille in dem die Querrille nach radial innen begrenzenden Rillengrund ein parallel zum Verlauf der Querrille verlaufend ausgebildeter Feineinschnitt der Breite b_{F} ausgebildet ist mit b_{F} ≤0,4 b₁ und mit b_{F} ≤0,8mm. Dies ermöglicht eine verbesserte Flexibilität beim Abrollen und hierdurch eine Verbesserung des Rollwiderstandes bei Aufrechterhaltung ausreichender Steifigkeit und geringer Geräuschbildung.

Die Erfindung wird im Folgenden an Hand der in den Figuren 1 bis 21 dargestellten Ausführungsbeispiele näher erläutert. Hierin zeigen
- Fig.1: eine Draufsicht auf einen Abschnitt eines Laufstreifenprofiles eines PKW-Fahrzeugluftreifens,
- Fig.2: Detaildarstellung des Details II von Fig.1,
- Fig.3: das Laufstreifenprofil von Fig.1 in Schnittdarstellung gemäß Schnitt III-III von Fig.2,
- Fig.4: das Laufstreifenprofil von Fig.1 in Schnittdarstellung gemäß Schnitt IV-IV von Fig.2,
- Fig.5: das Laufstreifenprofil von Fig.1 in Schnittdarstellung gemäß Schnitt V-V von Fig.2,
- Fig.6: das Laufstreifenprofil von Fig.1 in Schnittdarstellung gemäß Schnitt VI-VI von Fig.2"
- Fig.7: das Laufstreifenprofil von Fig. 1 in Detaildarstellung des Details II von Fig.1 mit alternativer Ausführung,
- Fig.8: das Laufstreifenprofil von Fig.1 und Fig.7 in Schnittdarstellung gemäß Schnitt VIII-VIII von Fig.7,
- Fig.9: das Laufstreifenprofil von Fig. 1 in Detaildarstellung des Details II von Fig.1 mit weiterer alternativer Ausführung,
- Fig.10: das Laufstreifenprofil von Fig. 1 in Detaildarstellung des Details II von Fig.1 mit weiterer alternativer Ausführung,
- Fig.11: das Laufstreifenprofil von Fig.1 und Fig.10 in Schnittdarstellung gemäß Schnitt XI-XI von Fig.10,
- Fig.12: das Laufstreifenprofil von Fig. 1 in Detaildarstellung des Details II von Fig.1 mit weiterer alternativer Ausführung,
- Fig.13: das Laufstreifenprofil von Fig.1 und Fig.12 in Schnittdarstellung gemäß Schnitt XIII-XIII von Fig.12,
- Fig.14: das Laufstreifenprofil von Fig. 1 in Detaildarstellung des Details II von Fig.1 mit weiterer alternativer Ausführung,
- Fig.15: das Laufstreifenprofil von Fig.1 und Fig.7 in Schnittdarstellung gemäß Schnitt VIII-VIII von Fig.7 zur Erläuterung einer weiteren alternativen Ausbildung,
- Fig.16: das Laufstreifenprofil von Fig.1 und Fig.15 in Schnittdarstellung gemäß Schnitt XVI-XVI von Fig.7,
- Fig.17: das Laufstreifenprofil von Fig.1 und Fig.15 in Schnittdarstellung gemäß Schnitt XVII-XVII von Fig.7,
- Fig.18: das Laufstreifenprofil von Fig.1 und Fig.2 in Schnittdarstellung gemäß Schnitt III-III von Fig.2 zur Erläuterung einer weiteren alternativen Ausbildung des Tiefenverlaufs,
- Fig.19: das Laufstreifenprofil von Fig.1, Fig.2 und Fig.18 in Schnittdarstellung gemäß Schnitt IV-IV von Fig.2,
- Fig.20: das Laufstreifenprofil von Fig.1, Fig.2 und Fig.18 in Schnittdarstellung gemäß Schnitt V-V von Fig.2,
- Fig.21: das Laufstreifenprofil von Fig.1 und Fig.2 in Schnittdarstellung gemäß Schnitt III-III von Fig.2 zur Erläuterung einer weiteren alternativen Ausbildung des Tiefenverlaufs.

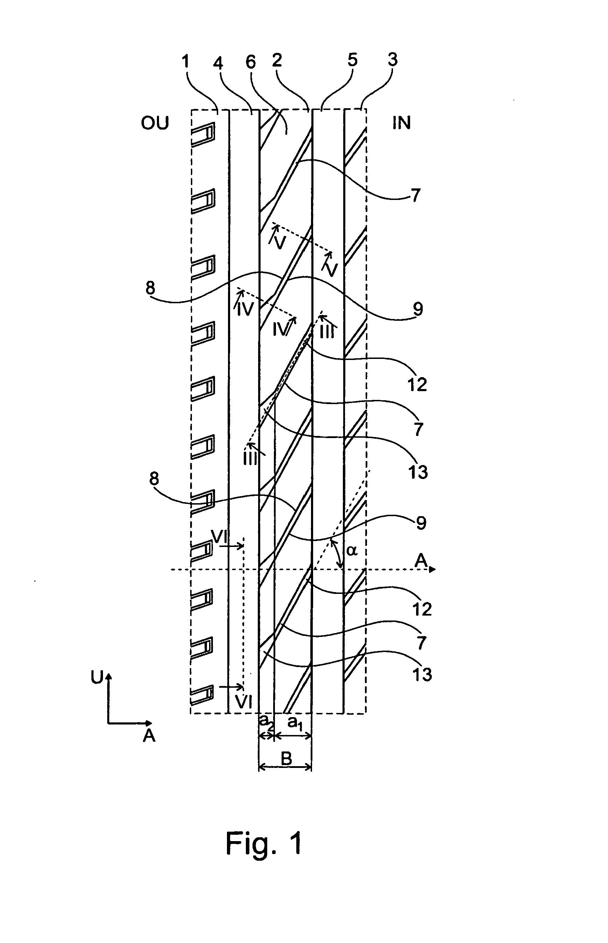

Die Figuren 1 bis 6 zeigen einen Ausschnitt eines Laufstreifenprofils eines Fahrzeugluftreifens für PKW, bei welchem in axialer Richtung A innerhalb der Bodenaufstandsbreite des Fahrzeugluftreifens eine Profilrippe 1, eine Umfangsrille 4, eine Profilblockreihe 2, eine Umfangsrille 5 und eine Profilblockreihe 3 nebeneinander angeordnet ausgebildet sind. Die Profilrippe 1, die Profilblockreihe 2, die Profilblockreihe 3 sowie die beiden Umfangsrillen 4 und 5 sind jeweils in Umfangsrichtung U des Fahrzeugluftreifens ausgerichtet und über den gesamten Umfang des Fahrzeugluftreifens erstreckt ausgebildet. In Figur 1 ist mit den Buchstaben OU eingetragen die zu der die Reifenaußenschulter des Fahrzeugluftreifens hinweisende Seite und mit den Buchstaben IN die zu der Reifeninnenschulter hinweisende Seite im Einsatz am Fahrzeug.

Die Profilblockreihe 2 ist aus in Umfangsrichtung U hintereinander angeordneten und jeweils durch Querrillen 7 voneinander beabstandeten Profilblockelementen 6 bekannter Art ausgebildet. Die Profilblockreihe 2 wird zur Reifenaußenseite OU hin in axialer Richtung A durch die Umfangsrille 4 und zur Reifeninnenseite IN hin durch die Umfangsrille 5 begrenzt. Die Umfangsrille 4 begrenzt darüber hinaus in axialer Richtung A auf ihrer zur Reifenaußenseite OU hin gerichteten Seite die Profilrippe 1. Die Umfangsrille 5 begrenzt in axialer Richtung A auf ihrer zur Reifeninnenseite IN hin gerichteten Seite die Profilblockreihe 3.

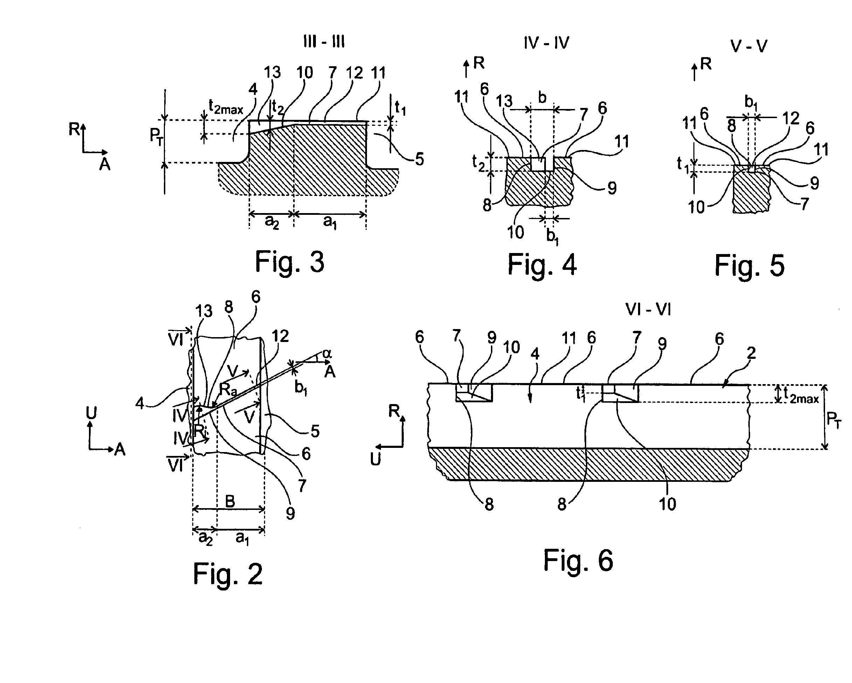

Die Querrillen 7 der Profilblockreihe 2 erstrecken sich in axialer Richtung A ausgehend von der Umfangsrille 4 bis in die Umfangsrille 5 hinein. Die Profilblockelemente 6 der Profilblockreihe 2 bilden mit ihrer in radialer Richtung R des Fahrzeugluftreifens nach außen gerichteten radial äußeren Oberfläche 11 die Straßenkontaktoberfläche. Die Querrillen 7 sind jeweils in radialer Richtung R nach innen durch einen Rillengrund 10 und zu den beiden in Umfangsrichtung U angrenzenden Profilblockelementen 6 jeweils mit einer Rillenwand 8 bzw. 9 begrenzt. Die beiden Rillenwände 8 und 9 erstrecken sich dabei jeweils aus dem Rillengrund 10 in radialer Richtung R nach außen bis zu der radial äußeren Oberfläche 11 der durch die jeweilige Rillenwand 8 bzw. 9 begrenzten Profilblockelemente 6. In den Darstellungen der Figuren 1 und 2 bildet die Rillenwand 8 die in Umfangsrichtung U nach oben hin orientierte, die Querrille 7 begrenzende Rillenwand und die Rillenwand 9 die in Umfangsrichtung U nach unten hin orientierte, die Querrille 7 begrenzende Rillenwand.

Die Umfangsrillen 4 und 5 sind jeweils mit einer in radialer Richtung R gemessenen maximalen Profiltiefe P_{T} ausgebildet, welche das maximale Maß zwischen der radial äußeren Oberfläche 11 der Profilblockreihe 2 an den tiefsten Punkt des Rillengrundes der jeweiligen Umfangsrille 4 bzw. 5 angibt.

Die Querrille 7 ist ausgehend von der Umfangsrille 5 in axialer Richtung A zur Umfangsrille 4 hin zunächst aus einem ersten Erstreckungsabschnitt 12 der in axialer Richtung A gemessenen Erstreckungslänge a₁ und aus einem im Anschluss daran bis zur Umfangsrille 4 erstreckten zweiten Erstreckungsabschnitt 13 der in axialer Richtung A gemessenen Erstreckungslänge a₂ ausgebildet. Die Erstreckungslänge a₁ ist dabei größer als die Erstreckungslänge a₂ gewählt. Die in axialer Richtung A gemessene Breite B der Profilblockreihe 2 ist im Erstreckungsbereich der Querrille 12 mit B = (a₂ + a₁) ausgebildet. Die Größen B, a₂ und a₁ werden in der radial äußeren Oberfläche 11 der Profilblockelemente 6 gemessen.

Die Querrille 7 ist im Erstreckungsabschnitt 12 geradlinig und mit einer über die gesamte Erstreckungslänge des Erstreckungsabschnitts 12 gemessenen konstanten Rillenbreite b₁ sowie mit einer über die gesamte Erstreckungslänge des Erstreckungsabschnitts 12 gemessenen konstanten Tiefe t₁ ausgebildet. Der Erstreckungsabschnitt 13 ist in Verlängerung des Erstreckungsabschnitts 12 ausgehend vom Erstreckungsabschnitt 12 bis zur Umfangsrille 4 hin mit einer stetig zunehmenden Rillentiefe t₂ sowie mit stetig zunehmender Rillenbreite b₂ ausgebildet. Die Rillenbreite b₁ und die Rillenbreite b₂ werden dabei jeweils senkrecht zur Haupterstreckungsrichtung des ersten Erstreckungsabschnitts 12 der Querrille 7 bemessen. Die Rillentiefen t₁ und t₂ werden jeweils ausgehend von der radial äußeren Oberfläche 11 in radialer Richtung R bis zum Rillengrund 10 bemessen. Die Tiefe t₂ des zweiten Erstreckungsabschnitts 13 ist in der Position des Übergangs des ersten Erstreckungsabschnitt 12 zum zweiten Erstreckungsabschnitt 13 noch gleich groß wie die Tiefe t₁. Innerhalb des Erstreckungsbereiches 13 nimmt ausgehend von dieser Position des Übergangs die Tiefe t₂ jedoch stetig bis zur Umfangsrille 4 hin zu, wo sie ihr maximales Maß t₂ₘₐₓ erreicht. Innerhalb des zweiten Erstreckungsbereiches 13 ist somit t₂ > t₁ ausgebildet.

Die Figuren 1 bis 6 zeigen ein Ausführungsbeispiel, bei dem der Tiefenverlauf der Tiefe t₂ im zweiten Erstreckungsbereich 13 ausgehend von der Position des Übergangs vom ersten Erstreckungsbereich 12 zum zweiten Erstreckungsbereich 13 bis hin zur Umfangsrille 4 konstant zunimmt.

Die Breite b₂ ist in der Position des Übergangs zwischen erstem Erstreckungsbereich 12 und zweitem Erstreckungsbereich 13 gleich groß wie die Breite b₁ des ersten Erstreckungsbereichs 12 und dann über die gesamte axiale Erstreckung des zweiten Erstreckungsbereichs 13 bis zur Umfangsrille 4 hin stetig zunehmend ausgebildet.

In dem in Fig.2 dargestellten Ausführungsbeispiel ist die Rillenwand 9 der Querrille 7 dabei sowohl im ersten Erstreckungsbereich 12 als auch im zweiten Erstreckungsbereich 13 jeweils in allen radialen Positionen längs ihrer radialen Erstreckung jeweils mit einem geradlinigen Verlauf ausgebildet, wobei die Rillenwand 9 im zweiten Erstreckungsbereich 13 die direkte geradlinige Verlängerung der Rillenwand 9 im ersten Erstreckungsbereich 12 bildet. Die Rillenwand 8 ist in allen radialen Positionen längs ihrer radialen Erstreckungsbereichs jeweils im ersten Erstreckungsbereich 12 mit einem geradlinigen Verlauf und im zweiten Erstreckungsbereich 13 mit einem s-förmigen krümmungsstetigen Verlauf ausgebildet. Die Rillenwand 8 ist dabei ausgehend von der Position des Übergangs zwischen erstem Erstreckungsbereich 12 und zweitem Erstreckungsbereich 13 jeweils zunächst mit einer von der Querrille 7 wegweisenden Krümmung mit einem Krümmungsradius Rₐ und im Anschluss daran mit einer zur Querrille 7 hinweisenden Krümmung mit einem Krümmungsradius Rᵢ ausgebildet, welche sich bis zur Umfangsrille 4 erstreckt. Der Übergang zwischen dem nach außen gekrümmten Verlauf des zweiten Erstreckungsbereichs 13 und dem ersten Erstreckungsbereich 12 sowie der Übergang zwischen dem nach außen gekrümmten Konturverlauf im Erstreckungsbereich 13 und dem nach innen gekrümmten Konturverlauf im Erstreckungsbereich 13 ist jeweils tangential ausgebildet.

Die Erstreckungslängen a₂ und a₁ sind mit ( a₁ +a₂)/4 ≤ a₂ < ( a₁ +a₂)/2 ausgebildet. In dem dargestellten Ausführungsbeispiel ist a₂ = a₁/2.

Die Tiefen t₁ und t₂ sowie die Breiten b₁ und b₂ sind so ausgebildet, dass längs des gesamten Erstreckungsbereichs des zweiten Erstreckungsabschnitts 13 der Querrille 7 für das Verhältnis (t₂ / b₂) gilt (t₁/ b₁) < (t₂/ b₂).

Die Breite b₁ ist mit 1 mm ≤ b₁ ≤ 2 mm gewählt. Die Tiefe t₁ ist mit 0,5 mm ≤ t₁ ≤ 2 mm gewählt.

Das maximale Maß b₂ₘₐₓ der Breite b₂ ist mit 3 mm ≤ b₂ₘₐₓ ≤ 10 mm ausgebildet. Das maximale Maß der Tiefe t₂ₘₐₓ ist mit 1,5 mm ≤ t₂ₘₐₓ ≤ 8 mm ausgebildet.

Beispielsweise ist b₁ = 1,5 mm, t₁ = 1,5 mm, t₂ₘₐₓ = 4 mm und b₂ₘₐₓ = 6 mm ausgebildet.

Die Krümmung der Rillenwand 9 ist in dem nach außen gekrümmten Krümmungsbereich mit einem Krümmungsradius Rₐ und in dem nach innen gekrümmten Abschnitt mit einem Krümmungsradius Rᵢ gekrümmt ausgebildet, wobei der Krümmungsmittelpunkt des nach außen gekrümmten Krümmungsabschnitt auf der von der Rillenwand 8 zum von ihr begrenzten Profilblockelement 6 hinweisenden Seite und der Krümmungsmittelpunkt des nach innen gekrümmten Abschnitts auf der von der Rillenwand 8 zur Querrille 7 hinweisenden Seite angeordnet ist. Die Krümmungsradien sind beispielsweise zwischen 4 mm und 10 mm - beispielsweise mit 7mm - gewählt.

Die Querrille 7 ist in ihrer Haupterstreckung im ersten Erstreckungsabschnitt 12 unter einem Neigungswinkel α zur axialen Richtung A verlaufend ausgerichtet mit 0° ≤ α ≤ 60°. Beispielsweise ist - wie in Figur 2 dargestellt - α = 40° gewählt.

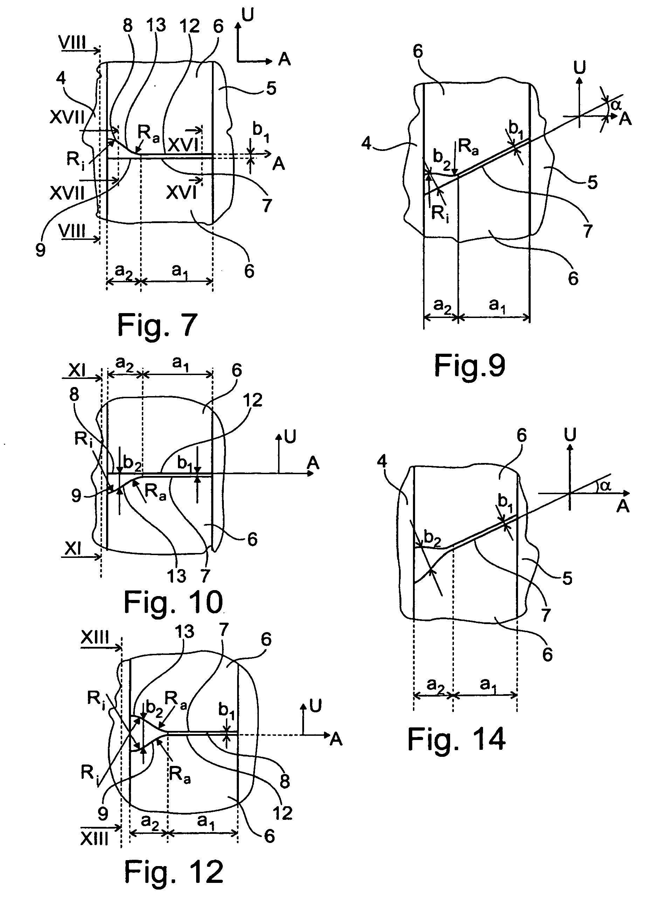

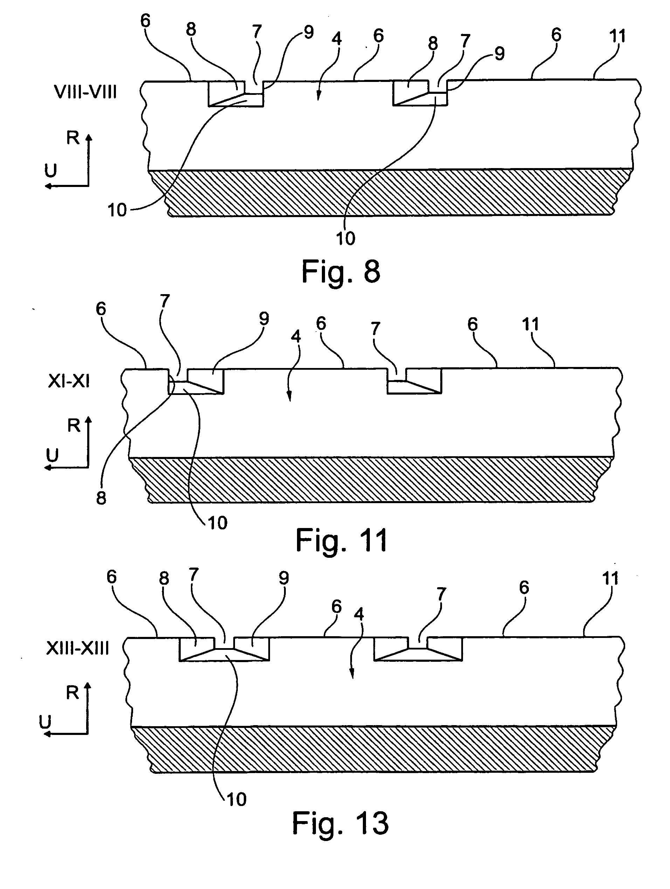

Die Figuren 7 und 8 zeigen ein Ausführungsbeispiel, welches wie im Zusammenhang mit den Figuren 1 bis 6 beschrieben ausgebildet ist, wobei der Neigungswinkel α mit α = 0° gewählt ist.

Die Figuren 10 und 11 zeigen ein den Figuren 7 und 8 entsprechendes Ausführungsbeispiel, bei dem jedoch die Rillenwand 8 im Erstreckungsbereich 13 in allen radialen Positionen jeweils geradlinig und als Verlängerung der geradlinigen Rillenwand 8 des ersten Erstreckungsbereichs 12 ausgebildet ist und bei dem die Rillenwand 9 im zweiten Erstreckungsbereich 13 mit jeweils s-förmigen krümmungsstetigem Verlauf mit einem im Anschluss an den ersten Erstreckungsbereich 12 zunächst nach außen gekrümmtem Verlauf mit Krümmungsradius Rₐ und mit einem anschließendem bis zur Umfangsrille 4 erstreckten nach innen gekrümmten Verlauf mit Krümmungsradius Rᵢ ausgebildet ist.

Die Figuren 12 und 13 zeigen ein Ausführungsbeispiel, bei dem sowohl die Rillenwand 8 als auch die Rillenwand 9 mit einem derartigen s-förmigen, krümmungsstetigen Verlauf ausgebildet ist und bei dem im Anschluss an den ersten Erstreckungsabschnitt 12 sowohl die Rillenwand 8 als auch die Rillenwand 9 in allen radialen Positionen ihres radialen Erstreckugnsbereiches jeweils zunächst einen nach außen gekrümmten Abschnitt mit Krümmungsradius Rₐ und im Anschluss daran einen nach innen gekrümmten Abschnitt mit Krümmungsradius Rᵢ aufweisen. In diesem Ausführungsbeispiel wird besonders deutlich, dass die Breite b₂ - wie in den anderen Ausführungsbeispielen auch - zunächst im Anschluss an den ersten Erstreckungsbereich 12 in axialer Erstreckungsrichtung zur Umfangsrille 4 hin mit einer progressive Zunahme ihrer Breite und anschließend eine degressiven Zunahme ihrer Breite b₂ ausgebildet ist.

Figuren 9 und 14 zeigt noch einmal den entsprechenden Verlauf des Ausführungsbeispiels von Figuren 1 bis 6 mit einem Neigungswinkel α, wobei in dem in Figur 9 dargestellten Ausführungsbeispiel - wie in Fig.1 - lediglich eine Rillenwand, nämlich die Rillenwand 8, und in dem in Figur 14 dargestellten Ausführungsbeispiel beide Rillenwände 8 und 9 im zweiten Erstreckungsbereich 13 mit dem entsprechenden s-förmigen krümmungsstetigen Verlauf ausgebildet sind.

In den oben dargestellten Ausführungsbeispielen ist die maximale Tiefe t₂ₘₐₓ kleiner oder gleich groß wie die Profiltiefe P_{T} der angrenzenden Umfangsrille 4 ausgebildet.

In dem in Figur 3 dargestellten Ausführungsbeispiel ist t₂ₘₐₓ mit t₂ₘₐₓ = (P_{T}/3) ausgebildet.

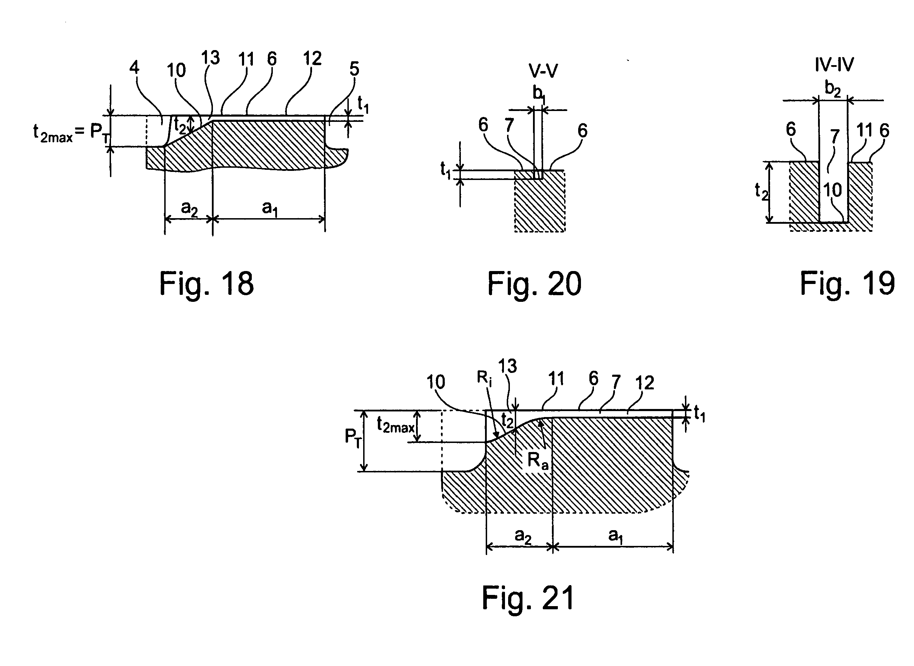

Die Figuren 18 bis 20 zeigen ein Ausführungsbeispiel, bei dem t₂ₘₐₓ mit t₂ₘₐₓ = P_{T} der angrenzenden Umfangsrille 4 ausgebildet ist.

Figur 21 zeigt ein Ausführungsbeispiel, bei dem auch der Tiefenverlauf t₂ im zweiten Erstreckungsabschnitt 13 ausgehend von der Position des Übergangs vom ersten Erstreckungsabschnitt 12 in den zweiten Erstreckungsabschnitt 13 bis zur Umfangsrille 4 hin einen s-förmigen krümmungsstetigen Verlauf aufweist, wobei zunächst im Anschluss an den ersten Erstreckungsbereich 12 der Tiefenkontur des Rillengrundes 10 und somit der Tiefenverlauf der Querrille 7 zunächst nach innen zum Reifen hin mit einem Krümmungsradius Rᵢ um einen auf der zum Reifen hinweisenden Seite des Rillengrundes 10 angeordneten Krümmungsmittelpunkt gekrümmt und im Anschluss daran nach radial außen hin mit einem Krümmungsradius Rₐ um einen auf der vom Rillengrund 10 nach in radialer Richtung R des Reifens nach außen wegweisenden Seite angeordneten Krümmungsmittelpunkt gekrümmt ist. Dabei ist sowohl der Übergang zwischen erstem Erstreckungsbereich 12 und zweitem Erstreckungsbereich 13 mit einen tangentialen Übergang des Tiefenverlaufes von t₁ zu t₂ als auch der Übergang zwischen dem nach radial innen gekrümmten und dem nach radial außen gekrümmten Verlauf mit einen tangentialen Übergang des Tiefenverlaufes des Rillengrundes 10 ausgebildet.

Die im Zusammenhang mit Figur 21 dargestellte Ausführung des Tiefenverlaufes des Rillengrundes 10 ist dabei in weiteren nicht dargestellten Ausführungsbeispielen auch bei den oben genannten dargestellten und/oder beschriebenen Ausführungen ausgebildet. So sind beispielsweise in nicht dargestellten Ausführungen sowohl bei den in den Figuren 7, 2, 9, 10 ausgebildeten Breitenverläufe, bei denen lediglich eine Rillenwand im zweiten Erstreckungsbereich 13 s-förmig stetig gekrümmt ausgebildet ist, als auch bei den Ausführungen von Figuren 12 und 14, bei denen beide Rillenwände im zweiten Erstreckungsbereich 13 s-förmig stetig gekrümmt ausgebildet sind, mit derartigem Tiefenverlauf gemäß Figur 21 ausgebildet.

Die oben erläuterten Ausführungsbeispiele weisen jeweils einen Rillengrund 10 auf, der über seine gesamte Breite hin jeweils flach und eben ausgebildet ist.

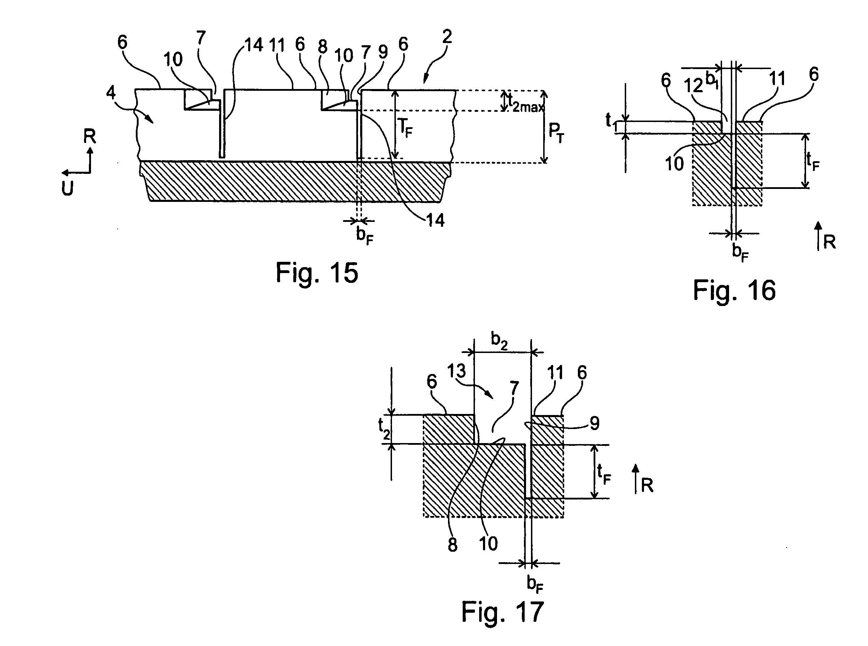

Die Figuren 15 bis 17 zeigen Ausführungsbeispiele, bei denen unmittelbar benachbart zur Rillenwand 9 im Rillengrund 10 ein Feineinschnitt 14 ausgebildet ist, welcher sich parallel zum Verlauf der Rillenwand 9 erstreckt. Der Feineinschnitt 14 erstreckt sich somit im ersten Erstreckungsbereich 12 in Erstreckungsrichtung des ersten Erstreckungsabschnitts 12 der Querrille 7.

Beim Einsatz beispielsweise in der Querrille 7 des in Figur 7 dargestellten Ausführungsbeispiels erstreckt sich der Feineinschnitt 14 über die gesamte Erstreckung der Querrille 7 geradlinig entlang der Rillenwand 9 und somit entlang der Rillenerstreckung.

Bei dem Einsatz des Feineinschnitts 14 in dem Figur 10 dargestellten Ausführungsbeispiel erstreckt sich der Feineinschnitt 14 im ersten Erstreckungsbereich 12 geradlinig parallel zur Erstreckungsrichtung der Querille 7 und im zweiten Erstreckungsabschnitt 13 der Rillenwand 9 folgend s-förmig stetig gekrümmt.

Der Feineinschnitt 14 ist - wie in den Figuren 15 bis 17 dargestellt - mit einer vom Rillengrund 10 der Querrille 7 im ersten Erstreckungsbereich 12 gemessenen Tiefe t_{F} und mit einer Breite b_{F} ausgebildet. Die Breite b_{F} ist mit maximal der 0,4fachen Breite der Querrille 7 im Bereich des Rillengrundes 10 und somit mit b_{F} ≤ 0,4 b₁ ausgebildet, wobei b_{F} ≤ 0,8 mm ist.

Die Tiefe t_{F} ist maximal so tief ausgebildet, dass im Bereich des ersten Erstreckungsbereichs 12 für die Summe aus t₁ und t_{F} gemessen im ersten Erstreckungsbereich(t₁+ t_{F} ) ≤ P_{T} und im Bereich des zweiten Erstreckungsbereichs 13 ebenfalls für die Summe aus t₂ und t_{F} gemessen im zweiten Erstreckungsbereich an jeder Stelle jeweils (t₂+ t_{F} ) ≤ P_{T} gilt.

### Bezugszeichenliste

### (Teil der Beschreibung)

- 1: Profilrippe
- 2: Profilblockreihe
- 3: Profilblockreihe
- 4: Umfangsrille
- 5: Umfangsrille
- 6: Profilblockelement
- 7: Querrille
- 8: Rillenwand
- 9: Rillenwand
- 10: Rillengrund
- 11: Radial äußere Oberfläche
- 12: Erster Erstreckungsbereich
- 13: Zweiter Erstreckungsbereich
- 14: Feineinschnitt

## Patentansprüche

1. Laufstreifenprofil eines Fahrzeugluftreifens mit einer Profilblockreihe (2), welche in axialer Richtung A des Fahrzeugluftreifens zu der als die für den Einsatz am Fahrzeug als Außenschulter OU des Reifens ausgebildeten Reifenschulter hin mit einer ersten Umfangsrille (4) und zu der als die für den Einsatz am Fahrzeug als Innenschulter IN des Reifens ausgebildeten Reifenschulter hin mit einer zweiten Umfangsrille (5) begrenzt wird, wobei die Profilblockreihe (2) aus in Umfangsrichtung U des Fahrzeugluftreifens hintereinander angeordneten und jeweils durch Querrillen (7) von einander beabstandeten Profilblockelementen (6) ausgebildet ist, wobei sich zumindest einige der Querrillen (7) ausgehend von der zweiten Umfangsrille (5) durch die Profilblockreihe (2) hindurch bis in die erste Umfangsrille (4) erstrecken,
**dadurch gekennzeichnet,**
**dass** zumindest einige - insbesondere alle - der sich von der zweiten (5) bis zur ersten (4) Umfangsrille erstreckten Querrillen (7) mit einem ersten von der zweiten Umfangsrille (5) ausgehenden Erstreckungsabschnitt (12) der in axialer Richtung A gemessenen Erstreckungslänge a₁ und mit einem in axialer Richtung A anschließenden bis zur ersten Umfangsrille (4) erstreckten zweiten Erstreckungsabschnitt (13) der in axialer Richtung A gemessenen Erstreckungslänge a₂ mit a₂< a₁ ausgebildet sind, wobei die Querrille (7) jeweils im ersten Erstreckungsabschnitt (12) längs seiner gesamten Erstreckung mit konstanter Rillenbreite b₁ und mit konstanter Rillentiefe t₁ und im zweiten Erstreckungsabschnitt (13) längs seiner gesamten Erstreckung ausgehend vom ersten Erstreckungsabschnitt (12) bis zur ersten Umfangsrille (4) mit stetig zunehmender Rillenbreite b₂ und mit stetig zunehmender Rillentiefe t₂ ausgebildet ist.

2. Laufstreifenprofil gemäß den Merkmalen von Anspruch 1,
wobei die Erstreckungslänge a₂ mit (a₁ +a₂)/4 ≤ a₂ < ( a₁ +a₂)/2 ausgebildet ist.

3. Laufstreifenprofil gemäß den Merkmalen von Anspruch 1,
wobei das Verhältnis aus Rillentiefe t₂ und Rillenbreite b₂ des zweiten Erstreckungsabschnitts (13)in allen Querschnittsflächen senkrecht zur Verlängerung der Erstreckungsrichtung der Querrille (7) im ersten Erstreckungsabschnitt (13) mit (t₁/ b₁) < (t₂/b₂) ausgebildet ist.

4. Laufstreifenprofil gemäß den Merkmalen von Anspruch 1 oder 2,
wobei die Rillenbreite b₁ mit 1mm ≤ b₁≤ 2mm ausgebildet ist.

5. Laufstreifenprofil gemäß den Merkmalen von einem oder mehreren der vorangegangenen Ansprüche,
wobei die Rillentiefe t₁ mit 0,5mm ≤ t₁≤ 2mm ausgebildet ist.

6. Laufstreifenprofil gemäß den Merkmalen von einem oder mehreren der vorangegangenen Ansprüche,
wobei die maximale Rillenbreite b₂ₘₐₓ des zweiten Erstreckungsbereichs (13) an der ersten Umfangsrille (4) mit 3mm ≤ b₂ₘₐₓ≤ 10mm ausgebildet ist.

7. Laufstreifenprofil gemäß den Merkmalen von einem oder mehreren der vorangegangenen Ansprüche,
wobei die maximale Rillentiefe t₂ₘₐₓ des zweiten Erstreckungsbereichs (13) an der ersten Umfangsrille (4) mit 1,5mm ≤ t₂ₘₐₓ≤ 8mm ausgebildet ist.

8. Laufstreifenprofil gemäß den Merkmalen von einem oder mehreren der vorangegangenen Ansprüche,
wobei die Querrille (7) längs ihrer gesamten Erstreckung im zweiten Erstreckungsabschnitt (13) ausgehend vom ersten Erstreckungsabschnitt (12) bis zur ersten Umfangsrille (4) mit konstant zunehmender Rillentiefe t₂ ausgebildet ist.

9. Laufstreifenprofil gemäß den Merkmalen von einem oder mehreren der vorangegangenen Ansprüche,
wobei wenigstens eine - insbesondere beide - die Querrille (7) in Umfangsrichtung U begrenzende Rillenwand(e) (8,9) im zweiten Erstreckungsabschnitt (13) in jeder radialen Position ausgehend vom ersten Erstreckungsabschnitt (12) bis zur ersten Umfangsrille (4) mit einem S-förmigen krümmungsstetigen Konturverlauf ausgebildet ist, wobei der Konturverlauf ausgehend vom ersten Erstreckungsabschnitt (12) zunächst mit einer von der Querrille (7) wegweisenden Krümmung und im Anschluss bis zur ersten Umfangsrille (4) mit einer zur Querrille (7) hinweisenden Krümmung ausgebildet ist.

10. Laufstreifenprofil gemäß den Merkmalen von einem oder mehreren der vorangegangenen Ansprüche,
wobei die Querrille (7) zumindest im ersten Erstreckungsabschnitt (12) in ihrer Haupterstreckungsrichtung unter Einschluss eines Winkels α zur axialen Richtung A des Fahrzeugluftreifens ausgerichtet ist mit 0°≤ α ≤60°.

11. Laufstreifenprofil gemäß den Merkmalen von einem oder mehreren der vorangegangenen Ansprüche,
wobei zumindest im ersten Erstreckungsbereich (12) der Querrille (7) in dem die Querrille (7) nach radial innen begrenzenden Rillengrund (10) ein parallel zum Verlauf der Querrille (12) verlaufend ausgebildeter Feineinschnitt (14) der Breite b_{F} ausgebildet ist mit b_{F} ≤0,4 b₁ und mit b_{F} ≤0,8mm.

## Claims

1. Tread profile of a pneumatic vehicle tyre, having a profile block row (2) which is delimited in an axial direction A of the pneumatic vehicle tyre towards the tyre shoulder formed as the outer shoulder OU of the tyre for use on the vehicle by a first circumferential channel (4) and towards the tyre shoulder formed as the inner shoulder IN of the tyre for use on the motor vehicle by a second circumferential channel (5), wherein the profile block row (2) is formed from profile block elements (6) which are arranged one behind the other in a circumferential direction U of the pneumatic vehicle tyre and which are spaced apart from one another in each case by transverse channels (7), wherein at least some of the transverse channels (7) extend from the second circumferential channel (5) through the profile block row (2) as far as into the first circumferential channel (4),
**characterized**
**in that** at least some - in particular all - of the transverse channels (7) that extend from the second (5) as far as the first (4) circumferential channel are formed with a first section of extent (12) which proceeds from the second circumferential channel (5) and which is of extent length a₁ measured in the axial direction A and with a second section of extent (13) which follows in the axial direction A and which extends as far as the first circumferential channel (4) and which is of extent length a₂ measured in the axial direction A, where a₂ < a₁, wherein the transverse channel (7) is formed in each case with a constant channel width b₁ and with a constant channel depth t₁ along its entire extent in the first section of extent (12) and with a continuously increasing channel width b₂ and with a continuously increasing channel depth t₂ along its entire extent in the second section of extent (13) proceeding from the first section of extent (12) as far as the first circumferential channel (4).

2. Tread profile according to the features of Claim 1,
wherein the extent length a₂ is configured such that (a₁ + a₂) /4 ≤ a₂ < (a₁ + a₂) /2.

3. Tread profile according to the features of Claim 1,
wherein the ratio of channel depth t₂ and channel width b₂ of the second section of extent (13) in all cross-sectional areas perpendicular to the projection of the extent direction of the transverse channel (7) in the first section of extent (12) is configured such that (t₁/b₁) < (t₂/b₂).

4. Tread profile according to the features of Claim 1 or 2,
wherein the channel width b₁ is configured such that 1 mm ≤ b₁ ≤ 2 mm.

5. Tread profile according to the features of one or more of the preceding claims,
wherein the channel depth t₁ is configured such that 0.5 mm ≤ t₁ ≤ 2 mm.

6. Tread profile according to the features of one or more of the preceding claims,
wherein the maximum channel width b₂ₘₐₓ of the second region of extent (13) at the first circumferential channel (4) is configured such that 3 mm ≤ b₂ₘₐₓ ≤ 10 mm.

7. Tread profile according to the features of one or more of the preceding claims,
wherein the maximum channel depth t₂ₘₐₓ of the second region of extent (13) at the first circumferential channel (4) is configured such that 1.5 mm ≤ t₂ₘₐₓ ≤ 8 mm.

8. Tread profile according to the features of one or more of the preceding claims,
wherein the transverse channel (7) is formed with a continuously increasing channel depth t₂ along its entire extent in the second section of extent (13) proceeding from the first section of extent (12) as far as the first circumferential channel (4).

9. Tread profile according to the features of one or more of the preceding claims,
wherein at least one - in particular both - of the channel wall(s) (8, 9) that delimit the transverse channel (7) in the circumferential direction U are/is formed, in the second section of extent (13) in all radial positions proceeding from the first section of extent (12) as far as the first circumferential channel (4), with an S-shaped contour profile of continuous curvature, wherein, proceeding from the first section of extent (12), the contour profile is formed initially with a curvature pointing away from the transverse channel (7) and subsequently, as far as the first circumferential channel (4), with a curvature pointing towards the transverse channel (7).

10. Tread profile according to the features of one or more of the preceding claims,
wherein the transverse channel (7), at least in the first section of extent (12), is oriented in terms of its main direction of extent so as to enclose an angle α with respect to the axial direction A of the pneumatic vehicle tyre, where 0° ≤ α ≤ 60°.

11. Tread profile according to the features of one or more of the preceding claims,
wherein, at least in the first region of extent (12) of the transverse channel (7), the channel base (10) that delimits the transverse channel (7) radially to the inside has formed therein a sipe (14) which is formed so as to run parallel to the profile of the transverse channel (7) and which has a width b_{F}, where b_{F} ≤ 0.4 b₁ and b_{F} ≤ 0.8 mm.

## Revendications

1. Profil de bande de roulement d'un bandage pneumatique de véhicule comprenant une rangée de blocs profilés (2) qui est limitée dans la direction axiale A du bandage pneumatique de véhicule vers l'épaulement de bandage réalisé en tant qu'épaulement extérieur OU du bandage pour l'utilisation sur le véhicule par une première gorge périphérique (4) et vers l'épaulement de bandage réalisé en tant qu'épaulement intérieur IN du bandage pour l'utilisation sur le véhicule par une deuxième gorge périphérique (5), la rangée de blocs profilés (2) étant constituée d'éléments de blocs profilés (6) espacés les uns des autres par des gorges transversales respectives (7) et disposés les uns derrière les autres dans la direction périphérique U du bandage pneumatique de véhicule, au moins quelques-unes des gorges transversales (7) s'étendant depuis la deuxième gorge périphérique (5) à travers la rangée de blocs profilés (2) jusque dans la première gorge périphérique (4),
**caractérisé en ce que**
au moins quelques-unes - en particulier la totalité - des gorges transversales (7) s'étendant depuis la deuxième gorge périphérique (5) jusqu'à la première gorge périphérique (4) sont réalisées avec une première portion d'étendue (12) partant de la deuxième gorge périphérique (5) de longueur d'étendue a₁ mesurée dans la direction axiale A et avec une deuxième portion d'étendue (13) se raccordant dans la direction axiale A et s'étendant jusqu'à la première gorge périphérique (4), de longueur d'étendue a₂ mesurée dans la direction axiale A, avec a₂ < a₁, la gorge transversale (7) étant réalisée à chaque fois dans la première portion d'étendue (12) le long de toute son étendue avec une largeur de gorge constante b₁ et avec une profondeur de gorge constante t₁ et dans la deuxième portion d'étendue (13) le long de toute son étendue depuis la première portion d'étendue (12) jusqu'à la première gorge périphérique (4) avec une largeur de gorge augmentant en continu b₂ et avec une profondeur de gorge augmentant en continu t₂.

2. Profil de bande de roulement selon les caractéristiques de la revendication 1, dans lequel la longueur d'étendue a₂ est réalisée avec (a₁ + a₂)/4 ≤ a₂ < (a₁ + a₂)/2.

3. Profil de bande de roulement selon les caractéristiques de la revendication 1, dans lequel le rapport de la profondeur de gorge t₂ et de la largeur de gorge b₂ de la deuxième portion d'étendue (13) dans toutes les surfaces en section transversale perpendiculairement au prolongement de la direction d'étendue de la gorge transversale (7) dans la première portion d'étendue (12) est tel que (t₁/b₁) < (t₂/b₂).

4. Profil de bande de roulement selon les caractéristiques de la revendication 1 ou 2, dans lequel la largeur de gorge b₁ est réalisée de telle sorte que 1 mm ≤ b₁ ≤ 2 mm.

5. Profil de bande de roulement selon les caractéristiques d'une ou plusieurs des revendications précédentes, dans lequel la profondeur de gorge t₁ est réalisée de telle sorte que 0,5 mm ≤ t₁ ≤ 2 mm.

6. Profil de bande de roulement selon les caractéristiques d'une ou plusieurs des revendications précédentes, dans lequel la largeur de gorge maximale b₂ₘₐₓ de la deuxième région d'étendue (13) au niveau de la première gorge périphérique (4) est réalisée de telle sorte que 3 mm ≤ b₂ₘₐₓ ≤ 10 mm.

7. Profil de bande de roulement selon les caractéristiques d'une ou plusieurs des revendications précédentes, dans lequel la profondeur de gorge maximale t₂ₘₐₓ de la deuxième région d'étendue (13) au niveau de la première gorge périphérique (4) est réalisée de telle sorte que 1,5 mm ≤ t₂ₘₐₓ ≤ 8 mm.

8. Profil de bande de roulement selon les caractéristiques d'une ou plusieurs des revendications précédentes, dans lequel la gorge transversale (7) est réalisée le long de toute son étendue dans la deuxième portion d'étendue (13) depuis la première portion d'étendue (12) jusqu'à la première gorge périphérique (4) avec une profondeur de gorge augmentant en continu t₂.

9. Profil de bande de roulement selon les caractéristiques d'une ou plusieurs des revendications précédentes, dans lequel au moins l'une - en particulier les deux - des parois de gorge (8, 9) limitant la gorge transversale (7) dans la direction périphérique U dans la deuxième portion d'étendue (13) dans chaque position radiale depuis la première portion d'étendue (12) jusqu'à la première gorge périphérique (4) est réalisée avec une allure de contour de courbure constante en forme de S, l'allure de contour depuis la première portion d'étendue (12) étant réalisée tout d'abord avec une courbure s'éloignant de la gorge transversale (7) et ensuite jusqu'à la première gorge périphérique (4) avec une courbure tournée vers la gorge transversale (7).

10. Profil de bande de roulement selon les caractéristiques d'une ou plusieurs des revendications précédentes, dans lequel la gorge transversale (7) est orientée au moins dans la première portion d'étendue (12) dans sa direction d'étendue principale en formant un angle α par rapport à la direction axiale A du bandage pneumatique de véhicule, avec 0° < α ≤ 60°.

11. Profil de bande de roulement selon les caractéristiques d'une ou plusieurs des revendications précédentes, dans lequel, au moins dans la première région d'étendue (12) de la gorge transversale (7) dans le fond de gorge (10) limitant radialement vers l'intérieur la gorge transversale (7), est réalisée une fine entaille (14) de largeur b_{F} s'étendant parallèlement à l'allure de la gorge transversale (7), avec b_{F} ≤ 0,4 4 b1 et avec b_{F} ≤ 0,8 mm.
